# EUROPEAN PATENT APPLICATION

(11) **EP 4 576 808 A1**
(43) Date of publication of application: **25.06.2025**
(21) Application number: 23218203.0
(22) Date of filing: 19.12.2023
(51) Int. Cl.: H04Q 11/00

(54) **ENERGY-EFFICIENT DYNAMIC BANDWIDTH ASSIGNMENT**

(71) Applicant: Nokia Solutions and Networks Oy, 02610 Espoo (FI)
(72) Inventor: TSIAFLAKIS, Paschalis, 2223 Schriek (BE); PEREZ BLANCO, Ricardo, 2018 Antwerp (BE)
(74) Representative: IP HILLS NV

(57) **Abstract**

Example embodiments describe an optical line terminal (110), OLT, configured to communicate in a passive optical network (100), PON, with optical network units (130, 140, 150), ONUs; wherein the OLT comprises means configured to dynamically assign bandwidths to traffic-bearing entities (131, 132) within the ONUs that are equal to estimated bandwidth demands of the respective traffic-bearing entities by allocating upstream transmission opportunities (201, 204, 207, 210) to the traffic-bearing entities; and wherein the means are further configured to perform assigning bandwidth margins (203, 206, 209, 212) to the respective traffic-bearing entities in addition to the estimated bandwidth demands (202, 205, 208, 211); and wherein the OLT further comprises a receiver configured to receive upstream optical signals from the traffic-bearing entities during the allocated upstream transmission opportunities; and wherein the receiver is further configured to power down one or more functionalities during non-allocated periods (213, 214, 215) free of upstream optical signals.

## Description

### Field of the Invention

Various example embodiments relate to an apparatus and a method for dynamic bandwidth assignment in a passive optical network.

### Background of the Invention

Dynamic bandwidth assignment, DBA, is a functionality in passive optical networks, PONs, that dynamically allocates upstream transmission opportunities to traffic-bearing entities of optical network units, ONUs. An operator typically provisions one or more service parameters for a traffic flow that ensures the quality of service by imposing constraints on the assigned bandwidth and the latency. The assigned bandwidth or assigned data rate of a traffic flow is typically determined based on the current activity of the traffic-bearing entities, i.e. the bandwidth demand, and the bandwidth-related service parameters, e.g. fixed bandwidth, assured bandwidth, and maximum bandwidth. Some DBA algorithms result in futile power consumption within the PON when the upstream traffic load is low. Other DBA algorithms result in reduced quality of service.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to reduce the energy consumption in a passive optical network without negatively impacting the quality of service.

This object is achieved, according to a first example aspect of the present disclosure, by an optical line terminal, OLT, configured to communicate in a passive optical network, PON, with optical network units, ONUs; wherein the OLT comprises means configured to dynamically assign bandwidths to traffic-bearing entities within the ONUs that are equal to estimated bandwidth demands of the respective traffic-bearing entities by allocating upstream transmission opportunities to the traffic-bearing entities; and wherein the means are further configured to perform assigning bandwidth margins to the respective traffic-bearing entities in addition to the estimated bandwidth demands; and wherein the OLT further comprises a receiver configured to receive upstream optical signals from the traffic-bearing entities during the allocated upstream transmission opportunities; and wherein the receiver is further configured to power down one or more functionalities during non-allocated periods free of upstream optical signals.

Thus, the bandwidth assigned to a traffic-bearing entity is the sum of the estimated bandwidth demand of that traffic-bearing entity, and the bandwidth margin. In other words, the lengths of the upstream transmission opportunities allocated to the traffic-bearing entities for transmitting upstream burst signals is defined by the bandwidth margins in addition to the estimated bandwidth demands. The estimated bandwidth demand may, for example, be determined or estimated based on reported buffer occupancies within the traffic-bearing entities that is solicited by the OLT and provided by the ONUs, e.g. dynamic bandwidth report upstream, DBRu, according to the ITU-T G.9807.1 standard. Alternatively or complementary, the estimated bandwidth demand may be determined by monitoring upstream frames received by the OLT, e.g. by measuring an amount of payload data transmitted during one or more transmission opportunities and/or by comparing the amount of idle XGEM frames with bandwidth maps. The respective traffic-bearing entities may have different bandwidth margins assigned to them, e.g. depending on their respective estimated bandwidth demands. Alternatively or complementary, some or all of the traffic-bearing entities may have substantially the same bandwidth margin assigned to them.

By assigning bandwidth equal to the sum of the estimated bandwidth demands and the bandwidth margins, only a portion of the effective available bandwidth capacity of the PON is assigned to the traffic-bearing entities when the upstream traffic load within the PON is lower than the effective available bandwidth capacity. As a result, the upstream transmission window comprises periods without allocated upstream transmission opportunities, i.e. non-allocated periods. Powering down one or more functionalities of the OLT receiver during these periods reduces the energy consumption of the OLT by preventing futile power consumption to receive idle data or idle XGEM frames within the upstream optical signals. The one or more functionalities of the receiver may include analogue circuitries and/or digital signal processing circuitries such as, for example, an analogue-to-digital converter, a clock-and-data recovery device, an equalizer, and/or a decoder. Powering down one or more receiver functionalities refers to adjusting the operational state of at least a part of the OLT receiver from a first operational state for receiving and decoding upstream optical signals, to a second operational state that consumes less power than the first operational state.

Assigning the bandwidth margins on top of the estimated bandwidths ensures that sufficient bandwidth is assigned to the traffic-bearing entities to avoid or limit negative impact on the quality of service, as the estimated bandwidth demands may underestimate the effective, i.e. true or real, bandwidth demands. In doing so, queue fill build-up, increased latency, jitter, increased packet loss probability, and/or reduced TCP throughput can be avoided or limited.

Thus, assigning the bandwidth margins to the respective traffic-bearing entities in addition to the estimated bandwidth demands and powering down one or more receiver functionalities during the non-allocated periods allows reducing the energy consumption of the PON while avoiding negative impact on quality of service. It is an advantage that this can easily be incorporated into existing PONs as it only requires limited software modifications, e.g. of a DBA algorithm.

According to an example embodiment, the receiver is configured to decode upstream optical signals according to Low-Density Parity-Check, LDPC, error decoding; and wherein the LDPC error decoding is powered down during the non-allocated periods.

LDPC error decoding is typically present in recent PON technologies such as, for example, a 25GS-PON, a 50G-PON according to the ITU-T G.9804 standard, or a PON with optical transmissions above 50Gb/s according to the ITU-T G.suppl.VHSP work programme. LDPC error decoding can achieve lower bit error ratios for a given energy to noise power ratio per useful bit, e.g. compared to Reed Solomon error decoding. Powering down or not executing the LDPC error decoding during periods without upstream transmission opportunities can avoid the relatively large power consumption associated with LDPC error decoding idle data or frames. Thereby, the energy-efficiency of the PON can be improved.

According to an example embodiment, one or more bandwidth margins may be predetermined values regardless of the estimated bandwidth demands.

In other words, the bandwidth margins for one or more traffic-bearing entities may be fixed values that are assigned in addition to the estimated bandwidth demand for those traffic-bearing entities.

According to an example embodiment, one or more bandwidth margins may be dynamic values; and wherein the means may further be configured to perform determining the one or more bandwidth margins for one or more traffic-bearing entities based on the estimated bandwidth demands of the one or more traffic-bearing entities.

Thus, the size or value of a bandwidth margin for a respective traffic-bearing entity may change in time according to the estimated bandwidth demand of said traffic-bearing entity.

According to an example embodiment, determining one or more bandwidth margins may comprise determining the one or more bandwidth margins based on a proportional relationship with the estimated bandwidth demands.

In doing so, the sum of the estimated bandwidth and bandwidth margin, i.e. the assigned bandwidth, scales with the estimated bandwidth demand in the PON. For example, the assigned bandwidth margins may increase linearly with the estimated bandwidth demand. Thus, a small bandwidth demand results in a relatively small assigned bandwidth, i.e. a limited amount of upstream bandwidth in terms of XGEM frames. A large bandwidth demand results in a relatively large assigned bandwidth, i.e. a substantial amount of upstream bandwidth in terms of XGEM frames.

According to an example embodiment, determining one or more bandwidth margins may comprise determining the one or more bandwidth margins such that the bandwidth assigned to the respective one or more traffic-bearing entities corresponds to a stepwise function of the estimated bandwidth demands.

In other words, the bandwidth margin for a traffic-bearing entity is determined such that the assigned bandwidth, i.e. the sum of the bandwidth margin and the estimated bandwidth demand, follows a stepwise function of the estimated bandwidth demand. The assigned bandwidth may thus be determined as a piecewise constant function or series of steps between a minimum and maximum estimated bandwidth demand, e.g. 0% and 100% of the maximum bandwidth for a traffic-bearing entity. To this end, intervals of estimated bandwidth demands may correspond to different values for the assigned bandwidth.

According to an example embodiment, the stepwise function may be characterized by hysteresis.

The assigned bandwidth, i.e. the sum of the estimated bandwidth demand and the bandwidth margin, may thus be determined to have a high value if the estimated bandwidth demand exceeds an upper threshold, and a low value if the estimated bandwidth demand is lower than a lower threshold. No switching occurs when the assigned bandwidth has a high value and the estimated bandwidth demand exceeds the lower threshold, or when the assigned bandwidth has a low value and the estimated bandwidth demand is lower than the upper threshold, thereby providing hysteresis in determining the bandwidth margin. This avoids unstable switching between assigned bandwidths. It will be apparent that the upper threshold and lower threshold define a single-step function. The stepwise function may further be a multi-step function defined by a plurality of upper and lower thresholds.

According to an example embodiment, determining one or more bandwidth margins for one or more traffic-bearing entities may further be based on respective service parameters of the one or more traffic-bearing entities that are indicative for a bias towards quality of service or power saving.

A traffic-bearing entity may thus be provisioned with a dedicated service parameter indicating a preference for quality of service or power saving. A preference or bias for quality of service can result in assigning larger bandwidth margins, while a preference or bias for power saving can result in assigning smaller bandwidth margins. This dedicated service parameter can be provisioned in addition to typical service parameters, e.g. fixed bandwidth, assured bandwidth, and maximum bandwidth according to the ITU-T G.9807.1 standard. The dedicated service parameter can indicate a qualitative preference or bias, e.g. 'quality of service' or 'power saving'. Alternatively or complementary, the dedicated service parameter can specify a quantitative preference or bias, e.g. a maximum power saving, a minimum power saving, a threshold bandwidth estimate, a minimum assigned bandwidth, a maximum assigned bandwidth or a guaranteed latency. This dedicated service parameter allows controlling the trade-off between quality of service impact and power saving. Alternatively or complementary, the bias towards quality of service or power saving may be derived from a particular configuration of typical service parameters.

According to an example embodiment, the means may further be configured to perform optimizing the bandwidth margins based on a buffer occupancy of the respective traffic-bearing entities.

The buffer occupancy or queue fill may be inferred by status reporting and/or local monitoring. This feedback allows establishing a control loop that optimizes the bandwidth safety margin over time. For example, generous bandwidth margins may initially be assigned to avoid negative impact on quality of service. The generous bandwidth margins may gradually be reduced, thereby increasing the power saving, until the buffer occupancy feedback indicates non-negligible increases in queue fill, i.e. a decrease in quality of service.

According to an example embodiment, the means may further be configured to perform instructing one or more ONUs to power down one or more transmitter functionalities for encoding upstream optical signals and transmitting upstream optical signals to the OLT.

The one or more transmitter functionalities may, for example, be a laser, or a Serializer/Deserializer, SERDES, link of one or more ONUs. The one or more ONUs may be instructed to power down these functionalities by means of a control message, e.g. a physical layer operation administration and maintenance, PLOAM, message. Powering down these transmitter functionalities in addition to powering down one or more functionalities of the OLT receiver allows to further increase the energy-efficiency of the PON by reducing unnecessary power consumption of the ONUs.

According to a second example aspect, an optical network unit, ONU, is disclosed configured to communicate in a passive optical network, PON, with an optical line terminal, OLT, according to the first aspect; and wherein the ONU comprises a transmitter configured to transmit upstream optical signals to the OLT during upstream transmission opportunities allocated to the ONU; and wherein the transmitter is further configured to power down one or more functionalities during the non-allocated periods.

According to an example embodiment, the transmitter may further be configured to power down one or more functionalities during upstream transmission opportunities allocated to other ONUs.

According to a second example aspect, a computer-implemented method is disclosed for dynamically assigning bandwidth to traffic-bearing entities within optical network units, ONUs, by an optical line terminal, OLT, configured to communicate in a passive optical network, PON, with the ONUs; wherein the OLT comprises a receiver configured to receive upstream optical signals from the ONUs; the computer-implemented method comprising:
- dynamically assigning bandwidths to the respective traffic-bearing entities equal to estimated bandwidth demands of the respective traffic-bearing entities and bandwidth margins by allocating upstream transmission opportunities to the traffic-bearing entities; and
- powering down one or more functionalities of the receiver during non-allocated periods free of upstream optical signals.

According to a third example aspect, a data processing system is disclosed configured to perform the computer-implemented method according to the second aspect.

According to a fourth example aspect, a computer program product is disclosed comprising computer-executable instructions which, when the program is executed by a computer, cause the computer to perform the computer-implemented method according to the second aspect.

### Brief Description of the Drawings

Fig. 1 shows a schematic block diagram of an example passive optical network;
Fig. 2 shows an example embodiment of transmission opportunities allocated by dynamic bandwidth assignment to traffic-bearing entities that improves the energy-efficient operation of the PON without negatively affecting the quality of service within the PON;
Fig. 3A shows an example of the difference in power consumption of an OLT by dynamically assigning bandwidth as the sum of the estimated bandwidth demands of traffic-bearing entities and bandwidth margins determined, according to example embodiments;
Fig. 3B shows an example embodiment wherein the assigned bandwidth corresponds to a stepwise function with hysteresis;
Fig. 3C shows a variation of the total dynamically assigned bandwidth in time equal to the sum of the estimated bandwidth demands and the bandwidth margins, according to example embodiments;
Fig. 4 shows a table comprising the average queue fill of traffic-bearing entities and the power consumption of a portion of the OLT receiver when applying a typical DBA algorithm that allocates the entire upstream transmission window, a DBA algorithm that allocates transmission opportunities equal to the estimated bandwidth demands, and a DBA algorithm according to example embodiments; and
Fig. 5 shows an example of a suitable computing system enabling to implement embodiments of the method for dynamically assigning bandwidth to traffic-bearing entities within ONUs.

### Detailed Description of Embodiment(s)

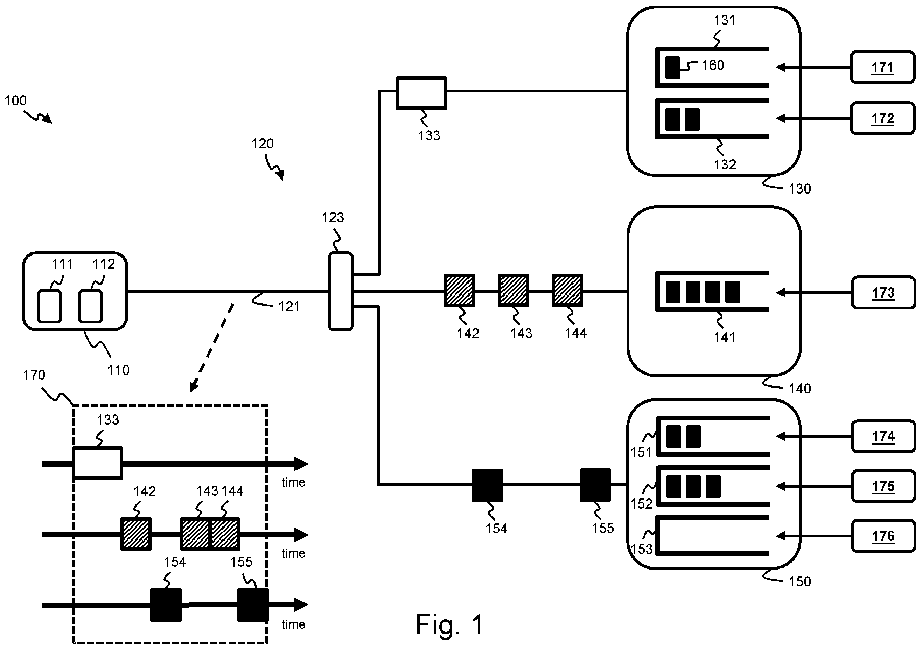

Fig. 1 shows a schematic block diagram of an example passive optical network, PON 100 comprising an optical line terminal, OLT, 110 connected to a plurality of optical network units, ONUs, 130, 140, 150 via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical signals coming from the connected ONUs 130, 140, 150 into a burst signal for the OLT 110. In this example, the OLT 110 is connected to three ONUs 130, 140, 150, however, the OLT 110 may be connected to fewer or more nodes.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or timeand wavelength-division multiplexing, TWDM.

In time-division multiplexing, TDM, the telecommunication medium 121 is shared in time between the ONUs 130, 140, 150 in the upstream. To this end, recurrent transmission opportunities 133, 142, 143, 144, 154, 155 are allocated to the respective ONUs 130, 140, 150 during which the respective ONUs 130, 140, 150 are allowed to transmit data to the OLT 110. Transmission opportunities may also be referred to as timeslots or bursts. For example, ONU 140 is allowed to transmit upstream data during the recurrent transmission opportunities 142, 143, 144.

The respective ONUs 130, 140, 150 comprise one or more traffic-bearing entities 131, 132, 141, 151, 152, 153 where data packets 160 originating from a connected service 171 - 176 or application await their turn to be transmitted to the OLT 110, e.g. in a data queue or buffer. The one or more traffic-bearing entities 131, 132, 141, 151, 152, 153 may be transmission containers, also referred to as T-CONTs. Transmission containers are ONU-objects that represent a group of logical connections within an ONU 130, 140, 150 that appear as a single entity for the purpose of upstream bandwidth assignment in a passive optical network.

The transmitted data during a recurrent transmission opportunity 133, 142, 143, 144, 154, 155 may thus originate from traffic-bearing entities 131, 132, 141, 151, 152, 153 within the associated ONUs 130, 140, 150. A respective traffic-bearing entity 131, 141, 151 is allowed to transmit data to the OLT 110 during a dedicated transmission opportunity 133, 142, 143, 144, 154, 155 that recurs in time, i.e. during a repeating timeslot. In between consecutive transmission opportunities associated with a certain traffic-bearing entity, e.g. 154 and 155, one or more non-overlapping recurrent transmission opportunities associated with different transmission queues may be allocated, e.g. 143 and 144.

Transmission opportunities associated with different traffic-bearing entities within the same ONU, e.g. transmission queues 131 and 132, may occur subsequently (not shown in Fig. 1), i.e. may follow each other in time. This can allow to only transmit one preamble for those subsequent traffic-bearing entities. For example, an upstream burst may include a single preamble for one or more recurrent transmission opportunities associated with different traffic-bearing entities within the same optical network unit, ONU. It will be apparent that the transmission opportunities 133, 142, 143, 144, 154, 155 shown in Fig. 1 are associated with a single traffic-bearing entity in the respective ONUs 130, 140, 150.

The transmission opportunities 133, 142, 143, 144, 154, 155 are allocated within an upstream transmission window 170 according to the bandwidths assigned to the traffic-bearing entities 131, 132, 141, 151, 152, 153 by dynamic bandwidth assignment, DBA, sometimes also referred to as dynamic bandwidth allocation. To this end, the OLT 110 may comprise a DBA engine 111 or DBA functional module that executes a DBA algorithm. The DBA engine 111 may be configured to determine or estimate a bandwidth demand of the traffic-bearing entities 131, 132, 141, 151, 152, 153 by collecting in-band status reports, by monitoring upstream frames, or a combination thereof. The DBA algorithm may implement a DBA model that defines how the assigned bandwidth for the traffic-bearing entities 131, 132, 141, 151, 152, 153 is to be determined, e.g. according to the reference DBA model of the ITU-T G.9807.1 standard. Based on the determined bandwidths, the DBA engine 111 also determines the size and timing of the upstream transmission opportunities 133, 142, 143, 144, 154, 155 such that the determined bandwidths are allocated to the traffic-bearing entities 131, 132, 141, 151, 152, 153. The transmission opportunities are then communicated to the ONUs in-band within a bandwidth map.

The OLT 110 further comprises a receiver 112, sometimes also referred to as a burst-mode receiver, configured to receive and decode upstream optical burst signals transmitted by the connected ONUs 130, 140, 150. To this end, the receiver 112 typically comprises burst-mode receiver components. The burst-mode receiver components may be analogue circuitries and/or digital circuitries. The burst-mode receiver components are typically interconnected to form a sequence or pipeline such that each burst-mode receiver component contributes to decoding the upstream optical burst signals. As such, the receiver 112 generates a decoded output signal, i.e. a digital signal.

Typical DBA algorithms assign the entire available upstream PON capacity by allocating the entire upstream transmission window 170 to respective traffic-bearing entities 131, 132, 141, 151, 152, 153, even when the upstream traffic in the PON 100 does not require the entire upstream PON capacity. In other words, the entire upstream transmission window 170 is divided into upstream transmission opportunities 133, 142, 143, 144, 154, 155 even when the sum of the bandwidth demands of the traffic-bearing entities 131, 132, 141, 151, 152, 153 within the PON 100 is smaller than the effective available upstream PON capacity.

This has the problem that a substantial portion of the allocated transmission opportunities 133, 142, 143, 144, 154, 155 comprise idle data or idle XGEM frames when upstream traffic in the PON 100 is low, e.g. when a limited amount of data packets 160 originate from connected services 171 - 176. This results in excessive power consumption within the PON 100, as the OLT receiver 112 consumes futile power to decode the idle data or idle XGEM frames. This futile power consumption may be particularly excessive for next generation PONs that include receiver functionalities with a relatively large power consumption due to a relatively high computational complexity, e.g. Low-Density Parity-Check, LDPC, error decoding. Such a next generation PON can for example be, amongst others, a 25GS-PON, a 50G-PON according to the ITU-T G.9804 standard, or a PON with optical transmissions above 50Gb/s according to the ITU-T G.suppl. VHSP work programme.

Other typical DBA algorithms assign bandwidth to the traffic-bearing entities 131, 132, 141, 151, 152, 153 equal to their estimated bandwidth demands. The estimated bandwidth demands can, for example, be determined based on in-band status reports or by monitoring upstream frames. In doing so, a portion of the upstream transmission window 170 may have periods without upstream transmission opportunities (not shown in Fig. 1) when upstream traffic demand is low. This can allow powering down some of the OLT functionalities during these periods, thereby decreasing power consumption. However, the estimated bandwidth demands are typically inaccurate as the bandwidth estimation algorithms can be suboptimal, the in-band status reports such as DBRu are inaccurate, the monitoring of the upstream frames or data is inaccurate, some components within the PON limit the obtainable accuracy, or PON standards hinder the implementation of a more accurate bandwidth estimation. This has the problem that the bandwidth demand can be underestimated, thereby resulting in an insufficient assigned bandwidth. This has the further problem that the quality of service can decrease due to queue fill build up, increased latency, jitter, increased packet loss probability, and/or reduced TCP throughput.

It can thus be desirable to dynamically assign bandwidth to traffic-bearing entities 131, 132, 141, 151, 152, 153 within a PON 100 such that the PON can operate more energy-efficiently without negatively affecting the quality of service within the PON, e.g. the quality of service offered to connected services 171 - 176.

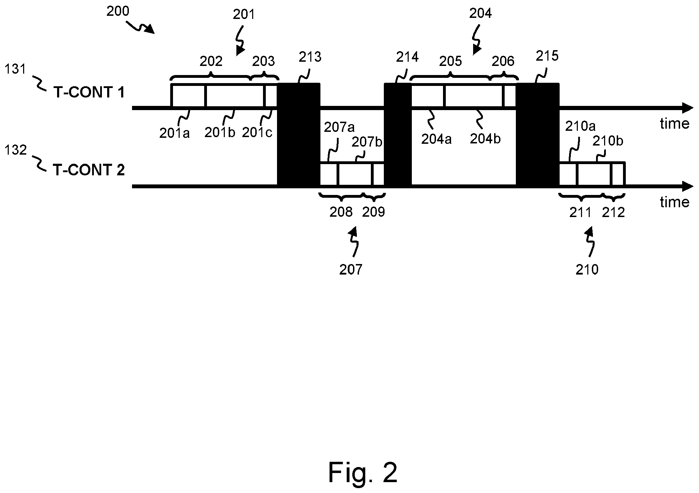

Fig. 2 shows an example embodiment of transmission opportunities 201, 207, 204, 210 that are allocated to traffic-bearing entities 131, 132 by dynamic bandwidth assignment such that the energy-efficient operation of the PON is improved without negatively affecting the quality of service within the PON. To this end, an OLT 110 in a PON 100 comprises means configured to dynamically assign bandwidth to traffic-bearing entities 131, 132 that is equal to estimated bandwidth demands 202, 208, 205, 211 of the respective traffic-bearing entities 131, 132. The means are further configured to assign bandwidth margins 203, 209, 206, 212 to the respective traffic-bearing entities 131, 132 in addition to the estimated bandwidth demands 202, 208, 205, 211. Thus, the bandwidth assigned to a traffic-bearing entity, e.g. 131, is the sum of the estimated bandwidth demand of that traffic-bearing entity 202, 205, and the bandwidth margin 203, 206. In other words, the length of the upstream transmission opportunities 201, 204, 207, 210 allocated to the traffic-bearing entities 131, 132 is defined by the bandwidth margins 203, 206, 209, 212 in addition to the estimated bandwidth demands 202, 205, 208, 211. It will be apparent that the respective traffic-bearing entities in a PON may have different bandwidth margins assigned to them depending on their estimated bandwidth demands. Alternatively or complementary, some or all of the traffic-bearing entities may have substantially the same bandwidth margin assigned to them.

The means of the OLT may, for example, be a DBA engine or DBA functional module that executes a DBA algorithm, e.g. DBA engine 111 in Fig. 1. The estimated bandwidth demands may, for example, be determined based on reported buffer occupancies solicited by the OLT and provided by the ONUs, e.g. dynamic bandwidth report upstream, DBRu, according to the ITU-T G.9807.1 standard. Alternatively or complementary, the estimated bandwidth demands may be determined by traffic monitoring upstream frames received by the OLT, e.g. by measuring an amount of payload data transmitted during one or more transmission opportunities and/or by comparing the amount of idle XGEM frames with bandwidth maps.

The OLT further comprises a receiver configured to receive and decode upstream optical signals from the ONUs within the PON, e.g. receiver 112 in Fig. 1. The receiver is further configured to power down one or more functionalities during periods when no upstream transmission opportunities are allocated, i.e. non-allocated periods 213, 214, 215 between subsequently scheduled transmission opportunities 201, 207, 204, 210. During these non-allocated periods 213, 214, 215 there are no upstream frames transmitted from the traffic-bearing entities 131, 132 to the OLT. Powering down one or more receiver functionalities during these non-allocated periods 213, 214, 215 allows reducing the energy consumption of the OLT by preventing futile power consumption to decode idle data or idle XGEM frames.

The one or more functionalities of the receiver that are powered down may include analogue circuitries and/or digital signal processing circuitries, e.g. an analogue-to-digital converter, a clock-and-data recovery device, an equalizer, and/or a decoder. Powering down one or more receiver functionalities refers to adjusting the operational state of at least a part of the OLT receiver from a first operational state for receiving and decoding upstream optical signals, to a second operational state that consumes less power than the first operational state. This second operational state can for example be, amongst others, a standby mode, a sleep mode, a low-power mode, a disabled mode, a switched-off mode, or a mode of not executing the one or more receiver functionalities. Powering down one or more functionalities of the receiver can be achieved by instructing the receiver, e.g. by providing a control signal to the receiver at the start of a non-allocated period 213, 214, 215. Alternatively or complementary, powering down the one or more functionalities of the receiver can be achieved without actively instructing the receiver, e.g. one or more functionalities of the receiver may power down when receiving an input indicative for the absence of upstream optical signals during the non-allocated periods 213, 214, 215.

Assigning the bandwidth margins 203, 209, 206, 212 on top of the estimated bandwidths 202, 208, 205, 211 ensures that sufficient bandwidth is assigned to the traffic-bearing entities 131, 132 to avoid or limit negative impact on the quality of service, as the estimated bandwidth demands 202, 208, 205, 211 may underestimate the effective bandwidth demands. In doing so, queue fill build-up, increased latency, jitter, increased packet loss probability, and/or reduced TCP throughput can be avoided or limited. In other words, the bandwidth margins 203, 209, 206, 212 may provide a safety margin or buffer to account for the estimation error in the estimated bandwidth demands 202, 208, 205, 211.

This is further illustrated by a header 201a, a payload 201b, and idle data 201c that is transmitted during allocated transmission opportunity 201. As shown in Fig. 2, the estimated bandwidth demand 202 for traffic-bearing entity 131 does not correspond accurately to the header 201a and payload 201b transmitted during the transmission opportunity 201, i.e. to the effective or real bandwidth demand of T-CONT 131. As such, only assigning the estimated bandwidth demand 202 would cause quality of service degradation as a portion of the payload 201b would not be transmitted thereby causing queue build up in the associated traffic-bearing entity.

Thus, assigning the bandwidth margins 203, 209, 206, 212 to the respective traffic-bearing entities 131, 132 in addition to the estimated bandwidth demands 202, 208, 205, 211 and powering down one or more OLT receiver functionalities during the non-allocated periods 213, 214, 215 allows reducing the energy consumption of the PON while avoiding negative impact on quality of service. It is an advantage that this can easily be incorporated into existing PONs as it only requires limited software modifications and no changes to the existing hardware. It is a further advantage that network operators can safely provide the energy-saving capabilities of the present disclosure without risking quality of service degradation.

It will be apparent that Fig. 2 shows an example embodiment wherein the estimated bandwidths 202, 208, 205, 211 are smaller than the sum of the headers 201a, 204a, 207a, 210a and payloads 201b, 204b, 207b, 210b; but that the estimated bandwidths of one or more traffic-bearing entities may also be larger than the headers and payloads.

The one or more functionalities of the receiver that are powered down during the non-allocated periods 213, 214, 215 may include Low-Density Parity-Check, LDPC, error decoding. Powering down the LDPC error decoding during the non-allocated periods 213, 214, 215 allows substantially reducing the power consumption of the OLT, as LDPC error decoding typically consumes a substantial amount of power due to a relatively high computational complexity, e.g. compared to Reed Solomon error decoding. In doing so, the energy-efficiency of PONs can further be improved. Powering down the LDPC error decoding can be achieved by disabling or switching off the LDPC error decoding, or just not executing it. Alternatively, powering down the LDPC error decoding can be achieved by not executing at least a portion of the LDPC error decoding instructions. Powering down the LDPC error decoding can be achieved by instructing an LDPC decoder within the receiver, e.g. by providing a control signal to the LDPC decoder at the start of a non-allocated period 213, 214, 215. Alternatively or complementary, powering down the LDPC error decoding can be achieved without actively instructing the LDPC decoder, e.g. by powering down when receiving an input indicative for the absence of upstream optical signals during the non-allocated periods 213, 214, 215.

ONUs typically comprise a transmitter configured to encode and transmit upstream optical signals to the OLT. The means of the OLT may further be configured to perform instructing one or more ONUs to power down one or more transmitter functionalities during the non-allocated periods 213, 214, 215. This can be achieved by transmitting a control signal or message from the OLT to the ONUs, e.g. a physical layer operation administration and maintenance, PLOAM, message or an ONU management and control interface (OMCI) message. The one or more transmitter functionalities that are instructed to be powered down may, for example, be a laser, or a Serializer/Deserializer, SERDES, link of one or more ONUs. Powering down these transmitter functionalities in addition to powering down one or more receiver functionalities of the OLT allows to further increase the energy-efficiency of the PON by reducing unnecessary power consumption of the ONUs.

The transmitter of an ONU may further be configured to power down one or more functionalities during upstream transmission opportunities allocated to other ONUs. In other words, one or more transmitter functionalities of an ONU may only be activated to encode and transmit upstream optical signals during the upstream transmission opportunities allocated to the ONU.

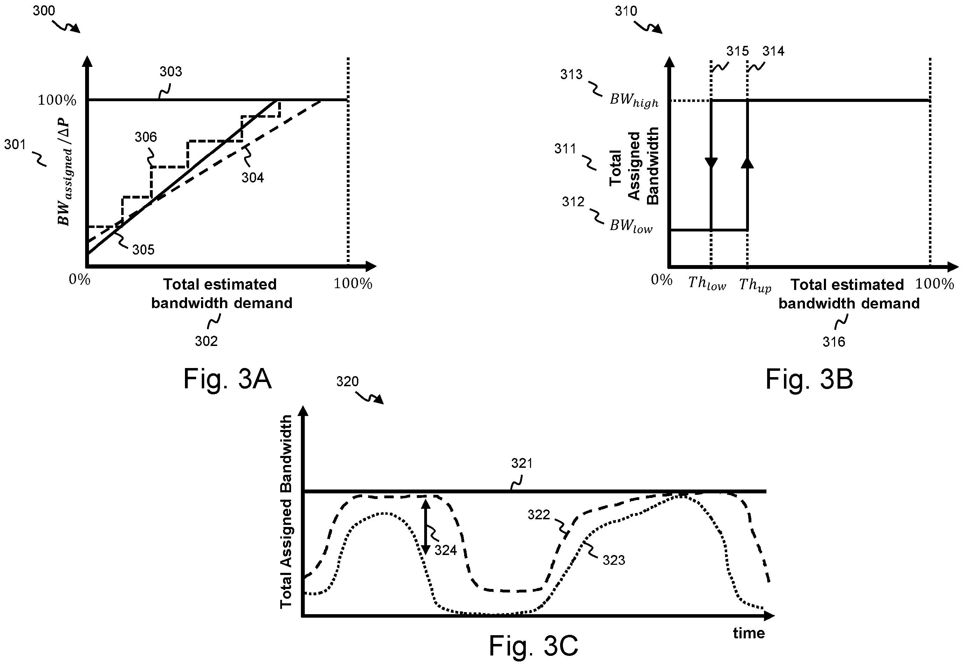

Fig. 3A shows examples 300 of the difference in power consumption ΔP of an OLT by dynamically assigning bandwidth as the sum of the estimated bandwidth demands of traffic-bearing entities and bandwidth margins 304, 305, 306 determined according to example embodiments. The difference in power consumption ΔP is indicative for the power consumption difference between assigning the entire available upstream PON capacity by allocating the entire upstream transmission window, illustrated by curve 303, and assigning a minimal upstream PON capacity by allocating the minimal upstream transmission window, illustrated by the smallest value of the vertical axis at the origin. The minimal value can correspond to zero or another small value. As discussed above, this results in an excessive power consumption saving 301 when the total estimated bandwidth demand 302 is low relative to the maximal assigned bandwidth. The difference in power consumption may further account for power that the OLT consumes regardless of the assigned bandwidth or frames, i.e. a baseline power consumption. The vertical axis 301 thus indicates the power consumption difference of the OLT receiver relative to the baseline power consumption, which is related to the assigned bandwidth. The horizontal axis 302 indicates the total estimated bandwidth demand in the PON, at one PON port of the OLT.

The one or more bandwidth margins may be predetermined values regardless of the estimated bandwidth demands. In other words, the bandwidth margins for one or more traffic-bearing entities may be fixed values in time that are assigned in addition to the estimated bandwidth demands for those traffic-bearing entities. An example of the resulting difference in power consumption is illustrated by curve 304 in Fig. 3A.

Alternatively or complementary, one or more bandwidth margins may be dynamic values that change in time according to the estimated bandwidth demands. As such, the means of the OLT may be configured to perform determining the bandwidth margins based on the estimated bandwidth demands of the one or more traffic-bearing entities.

The bandwidth margins may be determined based on a proportional relationship with the estimated bandwidth demands. For example, the bandwidth margin *BW_{M}*(*t*) may be determined proportional to the estimated bandwidth demand, i.e. *BW_{M}*(*t*) = *A* × *BW_{d}*(*t*) wherein *A* is a constant and *BW_{d}*(*t*) is the estimated bandwidth demand at timestep t. In another example, the bandwidth margin *BW_{M}*(*t*) may be determined as *BW_{M}*(*t*) = *B* + *A x BW_{d}*(*t*) wherein *B* is a fixed value. By determining the bandwidth margin based on a proportional relationship with the estimated bandwidth demand, the sum of the estimated bandwidths and bandwidth margins, i.e. the assigned bandwidth, scales with the total estimated bandwidth demand in the PON. An example of the resulting difference in power consumption of the OLT is illustrated by curve 305 in Fig. 3A. In this example, the bandwidth margins may increase linearly with the total estimated bandwidth demand in the PON. Thus, a small bandwidth demand results in a relatively small assigned bandwidth, i.e. a limited amount of upstream bandwidth in terms of XGEM frames. A large bandwidth demand results in a relatively large assigned bandwidth, i.e. a substantial amount of upstream bandwidth in terms of XGEM frames.

Alternatively, the bandwidth margins may be determined such that the bandwidth assigned to the respective traffic-bearing entities corresponds to a stepwise function of the estimated bandwidth demands. An example of the resulting difference in power consumption of the OLT is illustrated by curve 306 in Fig. 3A. The assigned bandwidth may thus be determined as a piecewise constant function or series of steps. To this end, bandwidth demand intervals, i.e. the steps of curve 306, may correspond to different values for the assigned bandwidth.

Alternatively, the assigned bandwidth may be determined as a stepwise function of the estimated bandwidth demands with hysteresis. This is illustrated in Fig. 3B. In this example embodiment 310, the bandwidth margins may be determined such that the assigned bandwidth has a high value 313 or a low value 312, respectively. The high assigned bandwidth is assigned if the total estimated bandwidth demand 316 exceeds an upper threshold *Thᵤₚ* 314, e.g. 1.25 Gbps. The value of the assigned bandwidth remains high until the total estimated bandwidth demand 316 drops below a lower threshold *Th_{low}* 315 that has a smaller value than the upper threshold *Thᵤₚ,* e.g. 0.625 Gbps. This hysteresis in the switching between the high assigned bandwidth 313 and the low assigned bandwidth 312 avoids unstable switching between assigned bandwidths 312 and 313 and, thus, improves the stability of the assigned bandwidth. The switching between the high bandwidth margin value and the low bandwidth margin value may further be conditional on a time threshold in addition to the thresholds *Th_{low}* 314 and *Thᵤₚ* 315 for the total bandwidth demand. For example, the assigned bandwidth may only switch to the high value if the upper threshold *Thᵤₚ* 314 is exceeded for a predetermined period of time, or the assigned bandwidth may only switch to the low value if the total estimated bandwidth demand is lower than the lower threshold *Th_{low}* 315 for a predetermined period of time. The high value 313 may be such that the entire upstream bandwidth capacity is assigned. In doing so, negative impact on the quality of service may be avoided.

It will be apparent that while Fig. 3B shows an example of a single-step function with hysteresis, the bandwidth margins may also be determined such that the assigned bandwidth corresponds to a multi-step function with hysteresis, e.g. by adding hysteresis to 306. It will further be apparent that the bandwidth margins for some traffic-bearing entities within a PON may be predetermined values while other bandwidth margins for other traffic-bearing entities may be dynamic values determined based on their estimated bandwidth demands, i.e. based on a proportional relationship with the estimated bandwidth demands, as a stepwise function of the estimated bandwidth demands, as a single-step function of the estimated bandwidth demands with hysteresis, and/or according to another relationship of the estimated bandwidth demands.

Determining a bandwidth margin for a traffic-bearing entity may further be based on a service parameter of the traffic-bearing entity that is indicative for a bias towards quality of service or power saving. Traffic-bearing entities may thus be provisioned with a dedicated service parameter indicative for a preference for quality of service or power saving. A preference or bias for quality of service can result in assigning larger bandwidth margins, while a preference or bias for power saving can result in assigning smaller bandwidth margins. This dedicated service parameter can be provisioned in addition to typical service parameters, e.g. fixed bandwidth, assured bandwidth, and maximum bandwidth according to the ITU-T G.9807.1 standard. The dedicated service parameter can indicate a qualitative preference or bias, e.g. 'quality of service' or 'power saving'. Alternatively or complementary, the dedicated service parameter can specify a quantitative preference or bias, e.g. a maximum power saving, a minimum power saving, a threshold bandwidth estimate, a minimum assigned bandwidth, a maximum assigned bandwidth, or a guaranteed latency. This dedicated service parameter allows controlling the trade-off between quality-of-service impact and power saving, e.g. depending on the service or application connected to a traffic-bearing entity. Alternatively or complementary, the bias towards quality of service or power saving may be derived from a particular configuration of typical service parameters.

The means of the OLT may further be configured to optimize the determined bandwidth margins based on feedback from the traffic-bearing entities. This feedback may include in-band status reports indicative for a buffer occupancy or queue fill included in the upstream frames, e.g. DBRu according to the ITU-T G.9807.1 standard. Alternatively or complementary, the feedback may be obtained by monitoring upstream frames received by the OLT wherefrom a buffer occupancy of the traffic-bearing entities can be inferred, e.g. by measuring an amount of payload data transmitted during one or more transmission opportunities and/or by comparing the amount of idle XGEM frames with bandwidth maps. For example, if the feedback indicates that a buffer occupancy or queue fill of a traffic-bearing entity is increasing or exceeds a threshold, the assigned bandwidth margins may be increased to avoid negatively impacting the quality of service at the cost of reduced power savings. Vice-versa, if the feedback indicates that a buffer occupancy of a traffic-bearing entity is decreasing or drops below a threshold, the assigned bandwidth margins may be decreased to increase the power savings. As another example, generous bandwidth margins may initially be assigned to avoid negative impact on quality of service. The generous bandwidth margins may gradually be reduced in time, thereby increasing the power saving, until the buffer occupancy feedback indicates non-negligible increases in queue fill, i.e. a decrease in quality of service. Thus, this feedback allows establishing a control loop that optimizes the bandwidth safety margin in time.

Fig. 3C further shows the variation in time of the total dynamically assigned bandwidth 322 that is equal to the sum of the estimated bandwidth demands 323 and the bandwidth margins 324, according to example embodiments. It will be apparent that the assigned bandwidth 322 varies in time depending on the upstream traffic load, regardless of how the bandwidth margins are determined or even when the bandwidth margins are fixed. Contrary, the assigned bandwidth 321 of a typical DBA algorithm that assigns the entire available upstream PON capacity by allocating the entire upstream transmission window is static in time.

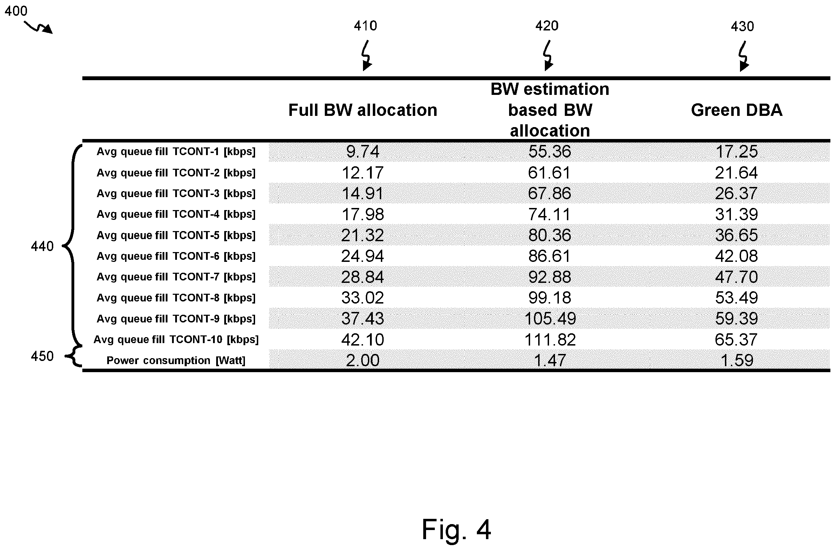

Fig. 4 shows a table 400 comprising the average queue fill of traffic-bearing entities 440 and the power consumption of a portion of the OLT receiver 450 when applying a typical DBA algorithm 410 that allocates the entire upstream transmission window, a DBA algorithm 420 that allocates transmission opportunities equal to the estimated bandwidth demands, and a DBA algorithm 430 according to example embodiments, also referred to as Green DBA. These queue fills 440 and power consumptions 450 are obtained by simulating a PON with ten T-CONTs; a traffic source corresponding to a typical Poisson distributed packet interarrival time with exponentially distributed packets sizes; an average traffic load that increases between 50 Mbps and 100 Mbps between T-CONT 1 and T-CONT 10; an effective available bandwidth capacity of the PON corresponding to 1 Gbps.

Table 400 shows that full bandwidth allocation 410 results in the lowest average queue fill but consumes a substantial amount of power 450, i.e. 2 W. Contrary, table 400 shows that allocating transmission opportunities equal to the estimated bandwidth demands 420 results in a low power consumption 450, i.e. 1.47 W, but increases the average queue fill 440 substantially. Table 400 further shows that Green DBA, i.e. assigning bandwidth margins in addition to the estimated bandwidth demands, results in substantial power savings compared to full bandwidth allocation 410, i.e. a power consumption of 1.47 W, without substantial increase in the average queue fill 440.

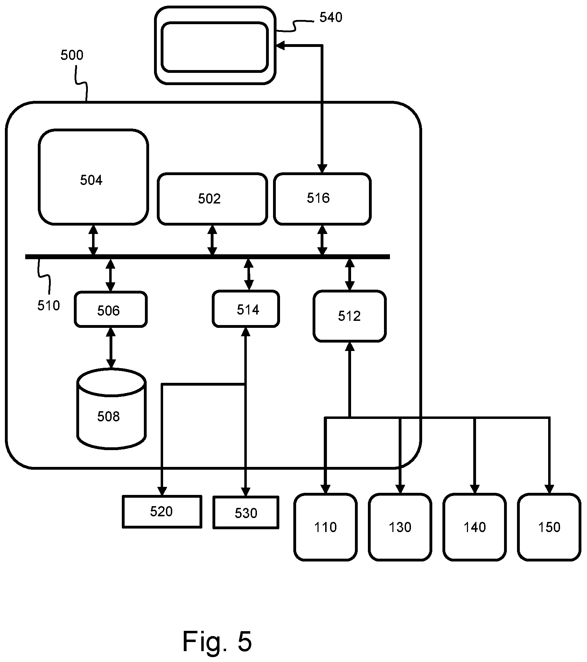

Fig. 5 shows a suitable computing system 500 enabling to implement embodiments of the method for dynamically assigning bandwidth to traffic-bearing entities within ONUs by an OLT. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with an OLT 110, and one or more ONUs 130, 140, 150. The communication interface 512 of computing system 500 may be connected to such a source node or destination node by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, ROM, disk, solid state drives, flash memory cards, etc. could be used. Computing system 500 could thus correspond to the means 111 of OLT 110 as illustrated in Fig. 1.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry and/or optical circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An optical line terminal (110), OLT, configured to communicate in a passive optical network (100), PON, with optical network units (130, 140, 150), ONUs; wherein the OLT comprises means configured to dynamically assign bandwidths to traffic-bearing entities (131, 132) within the ONUs that are equal to estimated bandwidth demands of the respective traffic-bearing entities by allocating upstream transmission opportunities (201, 204, 207, 210) to the traffic-bearing entities; and wherein the means are further configured to perform assigning bandwidth margins (203, 206, 209, 212) to the respective traffic-bearing entities in addition to the estimated bandwidth demands (202, 205, 208, 211); and wherein the OLT further comprises a receiver configured to receive upstream optical signals from the traffic-bearing entities during the allocated upstream transmission opportunities; and wherein the receiver is further configured to power down one or more functionalities during non-allocated periods (213, 214, 215) free of upstream optical signals.

2. The optical line terminal, OLT, according to claim 1, wherein the receiver is configured to decode upstream optical signals according to Low-Density Parity-Check, LDPC, error decoding; and wherein the LDPC error decoding is powered down during the non-allocated periods (213, 214, 215).

3. The optical line terminal, OLT, according to any of the preceding claims, wherein one or more bandwidth margins (203, 206, 209, 212) are predetermined values (223) regardless of the estimated bandwidth demands (226).

4. The optical line terminal, OLT, according to any of the preceding claims, wherein one or more bandwidth margins (203, 206, 209, 212) are dynamic values; and wherein the means are further configured to perform determining the one or more bandwidth margins for one or more traffic-bearing entities based on the estimated bandwidth demands (226) of the one or more traffic-bearing entities.

5. The optical line terminal, OLT, according to claim 4, wherein determining one or more bandwidth margins (203, 206, 209, 212) comprises determining the one or more bandwidth margins based on a proportional relationship (222) with the estimated bandwidth demands (226).

6. The optical line terminal, OLT, according to claim 4, wherein determining one or more bandwidth margins (203, 206, 209, 212) comprises determining the one or more bandwidth margins such that the bandwidth assigned to the respective one or more traffic-bearing entities corresponds to a stepwise function (224) of the estimated bandwidth demands (226).

7. The optical line terminal, OLT, according to claim 6, wherein the stepwise function is **characterised by** hysteresis.

8. The optical line terminal, OLT, according to any of claims 4 - 7, wherein determining one or more bandwidth margins for one or more traffic-bearing entities is further based on respective service parameters of the one or more traffic-bearing entities that are indicative for a bias towards quality of service or power saving.

9. The optical line terminal, OLT, according to any of the preceding claims, wherein the means are further configured to perform optimizing the bandwidth margins based on a buffer occupancy of the respective traffic-bearing entities.

10. The optical line terminal, OLT, according to any of the preceding claims, wherein the means are further configured to perform instructing one or more ONUs (130, 140, 150) to power down one or more transmitter functionalities for encoding upstream optical signals and/or transmitting upstream optical signals to the OLT (110).

11. An optical network unit, ONU, configured to communicate in a passive optical network, PON, with an optical line terminal, OLT, according to any of claims 1 - 10; and wherein the ONU comprises a transmitter configured to transmit upstream optical signals to the OLT during upstream transmission opportunities allocated to the ONU; and wherein the transmitter is further configured to power down one or more functionalities during the non-allocated periods.

12. The optical network unit, ONU, according to claim 11, wherein the transmitter is further configured to power down one or more functionalities during upstream transmission opportunities allocated to other ONUs.

13. A computer-implemented method for dynamically assigning bandwidth to traffic-bearing entities within optical network units, ONUs, by an optical line terminal, OLT, configured to communicate in a passive optical network, PON, with the ONUs; wherein the OLT comprises a receiver configured to receive upstream optical signals from the ONUs; the computer-implemented method comprising:
- dynamically assigning bandwidths to the respective traffic-bearing entities equal to estimated bandwidth demands of the respective traffic-bearing entities and bandwidth margins by allocating upstream transmission opportunities to the traffic-bearing entities; and
- powering down one or more functionalities of the receiver during non-allocated periods free of upstream optical signals.

14. A data processing system configured to perform the computer-implemented method according to claim 13.

15. A computer program product comprising computer-executable instructions which, when the program is executed by a computer, cause the computer to perform the computer-implemented method according to claim 13.
